# EUROPEAN PATENT APPLICATION

(11) **EP 1 219 694 A1**
(43) Date of publication of application: **03.07.2002**
(21) Application number: 00956894.0
(22) Date of filing: 04.09.2000
(51) Int. Cl.: C09J 167/00, C09J 201/00, C09J 7/02

(54) **PHOTOCURABLE PRESSURE-SENSITIVE ADHESIVE COMPOSITION AND PRESSURE-SENSITIVE ADHESIVE SHEET**

(30) Priority: 06.09.1999 JP 25164599
(71) Applicant: SEKISUI CHEMICAL CO., LTD., Osaka-shi, Osaka 530-8565 (JP)
(72) Inventor: HATAI, Munehiro, Sekisui Chemical Co., Ltd, Osaka 618-8589 (JP); ISHIZAWA, Hideaki, Sekisui Chemical Co., Ltd, Osaka 618-8589 (JP)
(74) Representative: TER MEER STEINMEISTER & PARTNER GbR
(86) International application number: JP0005979
(87) International publication number: WO0118144

(57) **Abstract**

A curable pressure-sensitive adhesive composition is provided which shows pressure-sensitive adhesive properties at ordinary temperature, cures upon exposure to a radiation and, after cure, exhibits sufficient bond strength even when it is applied to high-polarity adherends.

A photocurable pressure-sensitive adhesive composition comprising a polyester resin having a glass transition temperature (Tg) in the range of -60 °C - 25 °C, a cationically photopolymerizable compound and a cationic photoinitiator.

## Description

### TECHNICAL FIELD

The present invention relates to a photocurable pressure-sensitive adhesive composition which has pressure-sensitive properties at ordinary temperature and cures upon exposure to a radiation to exhibit high peel adhesion, and also to a curable pressure-sensitive adhesive sheet.

### BACKGROUND ART

Adhesives are generally provided in a liquid form and applied to adherends as by a brush or roller for subsequent joining thereof. After joining, such adhesives are rendered into a solid form via solvent evaporation or a polymeric reaction so that the adherends are strongly bonded to each other. Adhesives provide high bond strength but require a troublesome procedure for applying them to adherends. Further, the adherends must be held in position by some means until they are solidified, because of the relatively long reaction time. This constrains handleability.

Pressure-sensitive adhesives are mostly provided in the form of a coating that is supported by a film substrate. The pressure-sensitive adhesives are semi-solid viscoelastic materials which basically have wettability to adherends, called tack, and the ability to adhere to the adherends upon application of a light pressure. Such pressure-sensitive adhesives show advantageous working properties but have not provided bond strength as sufficiently as adhesives.

So-called "curable pressure-sensitive adhesives" have been recently proposed which can overcome the deficiencies associated with the use of those adhesives and pressure-sensitive adhesives, permit alignment during joining as easily as pressure-sensitive adhesives and, subsequent to the joining, can be solidified by some means. As an example of such curable pressure-sensitive adhesives, Japanese Patent Kohyo No. Hei 10-508636 discloses a curable pressure-sensitive adhesive sheet comprising an acrylic pressure-sensitive adhesive polymer, an epoxy-containing resin, and a cationic photoinitiator. This reference describes that the use of the pressure-sensitive adhesive polymer facilitates an operation of combining adherends and, after irradiation, a cure reaction is allowed to go proceed so that the sheet provides bond strength comparable in level to the bond strength that can be achieved by conventional adhesives.

But, the use of curable pressure-sensitive adhesives containing the aforementioned acrylic pressure-sensitive adhesive polymer has not necessarily led to the provision of sufficient bond strength to high-polarity adherends such as polyethylene terephthalate (PET), polyvinyl chloride (PVC), polyimide (PI) and the like. In general, a polyester resin is often used to improve such bond strength to high-polarity adherends. However, the use of a polyester resin, while generally known to be useful for incorporation into hot-melt adhesives, presents various problems. For one thing, the polyester resin has higher glass transition temperature and softening temperature compared to an acrylic polymer which is a popular ingredient of pressure-sensitive adhesives. Accordingly, if adherends are combined together under a gentle condition, e.g., at ordinary temperature, using the curable pressure-sensitive adhesive containing the polyester resin, the subsequent cure thereof results in the difficulty to obtain sufficient bond strength, particularly peel strength.

Further, the curable pressure-sensitive adhesive, if incorporating the aforementioned acrylic pressure-sensitive adhesive polymer, exhibits high initial pressure-sensitive adhesion at ordinary temperature and is not applicable to uses that require repairs. For example, in the case where electronic parts happen to be joined together at a location off the specification, it becomes difficult to remove them from each other and achieve repairing, if the interposed adhesive shows high initial pressure-sensitive adhesion. This disadvantageously lowers a yield.

### DISCLOSURE OF THE INVENTION

It is an object of the present invention to provide a curable pressure-sensitive adhesive composition which can solve the above-described problems encountered with the prior art, shows pressure-sensitive adhesive properties at ordinary temperature, cures upon exposure to a radiation and, after cure, exhibits sufficient bond strength even when it is applied to high-polarity adherends, and a curable pressure-sensitive adhesive and a curable pressure-sensitive adhesive sheet respectively obtainable from the curable pressure-sensitive adhesive composition.

It is another object of the present invention to provide a curable pressure-sensitive adhesive composition which permits repairs before cure and exhibits sufficient bond strength after cure, and a curable pressure-sensitive adhesive and a curable pressure-sensitive adhesive sheet respectively obtainable from the curable pressure-sensitive adhesive composition.

It is a further object of the present invention to provide a method for joining members using any of the above-described curable pressure-sensitive adhesive composition.

According to a broad aspect of the present invention, a photocurable pressure-sensitive adhesive composition is provided which comprises a polyester resin having a glass transition temperature (Tg) in the range of -60 to 25 °C, a cationically photopolymerizable compound, and a cationic photoinitiator.

As stated above, the photocurable pressure-sensitive adhesive composition of the present invention is comprised chiefly of a polyester resin having the above-specified Tg, a cationically photopolymerizable compound and a cationic photoinitiator. This composition shows pressure-sensitive adhesive properties at ordinary temperature and permits easy application. Upon exposure to a radiation, the cationically photopolymerizable compound initiates curing to produce a crosslinked structure in which the molecular chains of the polyester resin are duly incorporated, so that the adhesive composition develops high bond strength.

The use of the polyester resin having a Tg of 25 °C or lower, instead of acrylic pressure-sensitive adhesives, allows the adhesive composition to show sufficient wetting and good tackiness while permitting repairs. Subsequent to cure of the cationically photopolymerizable compound, the adhesive composition exhibits high bond strength.

Since the curing reaction proceeds in the form of cationic photopolymerization, it is allowed to continue even after termination of irradiation so that adherends are adhered more firmly to each other.

Preferably, the cationic photopolymerizable compound is incorporated in the amount of 10 - 40 parts by weight, based on 60 - 90 parts by weight of the polyester resin.

More preferably, the cationic photopolymerizable compound is incorporated in the amount of 25 - 40 parts by weight, based on 75 - 90 parts by weight of the polyester resin.

According to another particular aspect of the present invention, a curable pressure-sensitive adhesive sheet is provided which comprises the photocurable pressure-sensitive adhesive composition in accordance with the present invention.

According to a further aspect of the present invention, a method for joining members is provided which, when the members are combined together using the curable pressure-sensitive adhesive composition in accordance with the present invention, includes a step of exposing the adhesive composition to a radiation so that it is cured.

According to a further particular aspect of the present invention, a method for joining members is provided which is characterized in that, when the members are combined with each other using the curable pressure-sensitive adhesive sheet in accordance with the present invention, the curable pressure-sensitive adhesive sheet is exposed to a radiation so that it is cured.

The polyester resin for use in the present invention is a resin which has an ester bond in its backbone. This polyester resin is not particularly specified in structure, but has a glass transition temperature (Tg) in the range of -60 - 25 °C. The polyester resin, if having a Tg of lower than -60 °C, is excessively soft and difficult to be made into a tape form. The polyester resin, if having a Tg of higher than 25 °C, shows insufficient wetting to adherends when combined at room temperature, resulting in the difficulty to attain sufficient bond strength.

Examples of such polyester resins include VYLON 300, 500, 530, 550, 630, GK-130, GM900, GM990, GM 995 (products of Toyobo Co., Ltd.), UE3220, 3221, 3230, 3231, 3400 (products of Unitika Ltd.), LP011, 033, 035 (products of Nippon Synthetic Chem. Ind. Co., Ltd.) and the like.

For the cationically photopolymerizable compound, any compound can be used if it has at least one cationically photopolymerizable group in a molecule. Examples of cationically photopolymerizable groups include epoxy, oxetane, hydroxyl, vinyl ether, episulfide and ethylene imine groups. The cationically photopolymerizable compound for use in the present invention may have various molecular weights. This cationically photopolymerizable compound may be incorporated in the form of a monomer, oligomer or polymer. These cationically photopolymerizable compounds may be used alone or in combination.

An epoxy-containing compound is preferably used for the cationically photopolymerizable compound. Since the epoxy functionality is highly reactive to undergo ring opening polymerization and complete curing within a short period, a bonding process can be effectively shortened. Also, because of its attributes of high cohesion and elastic modulus, the incorporation of the epoxy-containing compound results in the successful provision of a cured adhesive excellent in heat resistance and bond strength. For example, adhesion defects such as delamination and sagging can be prevented if the adhesive is exposed to intense heat, e.g., soldering heat, during a manufacturing process of a printed circuit board or flexible printed wiring board.

Generally suitable for use as the epoxy-containing compound are epoxy resins. Examples of epoxy resins include bisphenol A epoxy resins, bisphenol F epoxy resins, phenol novolac epoxy resins, cresol novolac epoxy resins, glycidyl ether epoxy resins, glycidyl amine epoxy resins and the like.

Epoxy-containing oligomers can also be suitably used, examples of which include bisphenol A epoxy oligomers (e.g., EPICOAT 1001, 1002 and the like, manufactured by Yuka-Shell Epoxy Co., Ltd.).

Also applicable are addition polymers of the above-listed epoxy-containing monomers or oligomers, examples of which include glycidylated polyesters, glycidylated polyurethanes, glycidylated acrylics or the like.

In order to improve flexibility, bond strength or flexural strength, other types of resins may be added to the cationically photopolymerizable compound. Alternatively, the cationically photopolymerizable compound may be modified with the other resins. Examples include CTBN (terminal carboxyl-containing butadiene-acrylonitrile rubber) modified epoxy resins; epoxy resins incorporating an acrylic rubber, NBR, SBR, butyl rubber, nitrile rubber or isoprene rubber resin; chelate modified epoxy resins; polyol modified epoxy resins; and the like.

Preferably, the polyester resin is incorporated in the photocurable pressure-sensitive adhesive composition in the amount of 60 - 90 parts by weight, based on 100 parts by weight of the aforementioned cationically photopolymerizable compound and the polyester resin. If a blending proportion of the polyester resin falls below 60 parts by weight, the adhesive composition may show insufficient adhesion to high polarity adherends, such as metals, PET and PVC, or become excessively hard after cure to exhibit insufficient bond strength and impact resistance. On the other hand, if the blending proportion of the polyester resin exceeds 90 parts by weight, a proportion of moieties crosslinked via cationic polymerization may decrease to the extent that causes the adhesive composition to exhibit insufficient heat resistance after cure.

Where the adhesive composition is required to permit repairs, e.g., position adjustment, it preferably contains at least 75 parts by weight of the polyester resin. If below 75 parts by weight, the adhesive composition when cured may exhibit a level of bond strength which is too high to permit subsequent repairs.

The cationic photoinitiator may be of ionic or nonionic photoinduced acid-generation type. Examples of cationic photoinitiators of ionic photoinduced acid-generation type include onium salts such as aromatic diazonium salts, aromatic halonium salts and aromatic sulfonium salts; organometallic complexes such as iron-allene complex, titanocene complex, arylsilanol-aluminum complex; and the like. More specific examples thereof include OPTOMER SP-150 (product of Asahi Denka Kogyo Co.), OPTOMER SP-170 (product of Asahi Denka Kogyo Co.), UVE-1014 (product of General Electric Co.), CD-1012 (product of Sartomer Co.) and the like. Examples of cationic photoinitiators of nonionic photoinduced acid-generation type include nitrobenzyl ester, sulfonic acid derivatives, phosphate esters, phenolsulfonate esters, diazonaphthoquinone, N-hydroxyimidosulfonate and the like. The above-listed cationic photoinitiators may be used alone or in combination. Plural cationic photoinitiators which can be activated by irradiation at different effective wavelengths may be used in combination and subjected to two-stage curing.

Other photoinitiators, such as free-radical and anionic photoinitiators, can also be used in combination with the cationic photoinitiator. In such a case, a wavelength of a radiation that activates the free-radical or anionic photoinitiator needs not be identical to a wavelength of a radiation that activates the cationic photoinitiator.

The amount of the cationic photoinitiator incorporated in the photocurable pressure-sensitive adhesive composition in accordance with the present invention is not particularly specified, but is preferably sufficient to generate at least 0.0001 mole % cation based on 1 mole of a photopolymerizable functional group such as an epoxy group present in the aforementioned cationic photopolymerizable compound and polyester resin. If the cationic photoinitiator is loaded in the amount that generates less than 0.0001 mole % cation based on 1 mole of the aforementioned functional group, a cationic photopolymerization reaction does not proceed sufficiently so that a cure rate is slowed down.

In the present invention, an active energy radiation is utilized to activate the cationic photoinitiator. The active radiation is not particularly specified in form and may be in the form of microwave, infrared radiation, visible light, ultraviolet radiation, X-ray, Y-ray or the like. The ultraviolet radiation, among those, is preferably utilized for its particular capability to permit easy handling and provide a relatively high energy. The utilization of the ultraviolet radiation in the 200 - 400 nm wavelength region is particularly preferred.

Any type of radiation source can be used to provide such an ultraviolet radiation. Suitable sources of ultraviolet radiation include, for example, high-pressure mercury lamps, ultrahigh-pressure mercury lamps, chemical lamps, xenon lamps and the like.

The curable pressure-sensitive adhesive is rendered into a thin sheet form by using various sheeting techniques. Preferably, sheeting is achieved by coating the curable pressure-sensitive adhesive on a release-coated substrate sheet using, for example, a bar, roll, gravure or extrusion coating technique. In the case where the composition, either in a solid or liquid form, has such a high viscosity that prevents coating thereof, it may be diluted with a suitable solvent or heat melted to reduce its viscosity.

Since the sheeted curable pressure-sensitive adhesive shows pressure-sensitive properties at ordinary temperature, its pressure-sensitive surface is preferably protected by a release sheet to improve handleability.

The substrate and release sheet utilized in coating and sheeting the photocurable pressure-sensitive adhesive composition can be composed of various materials, examples of which include polyethyelene terephthalate, polyethylene naphthalate, polyethylene, polypropylene, polycarbonate, nylon, polyallylate, polysulfone, polyether sulfone, polyether ether ketone, polyphenylene sulfide, polystyrene, polyacryl, polyvinyl acetate, triacetyl cellulose, diacetyl cellulose, cellophane and the like. These sheets may be of any thickness but preferably have a thickness of 1 µm or greater, more preferably 10 µm or greater. The excessively thin sheets, because of low strength, may break during use.

In the present invention, the thickness of the curable pressure-sensitive adhesive sheet is not particularly specified, but is preferably in the range of 1 - 2,000 µm, more preferably in the range of 10 - 1,000 µm. If the thickness of the curable pressure-sensitive adhesive is below 1 µm, its adhesive properties may be affected by irregularities defined on a adherend surface. On the other hand, if it exceeds 2,000 µm, a cure time may be excessively extended.

Besides the aforementioned polyester resin, cationic photopolymerizable compound and cationic photoinitiator, the photocurable pressure-sensitive adhesive composition of the present invention may further contain a known tackifier, extender or the like, if appropriate, within the range that does not adversely affect the purposes of the present invention.

For example, a tackifying resin such as a rosin resin, modified rosin resin, terpene resin, terpene-phenolic resin, aromatic modified terpene resin, C5 or C9 petroleum resin, coumarone resin or the like, may be added for the purpose of improving tackiness of the curable pressure-sensitive adhesive of the present invention.

In the joining method in accordance with the present invention, the photocurable pressure-sensitive adhesive composition while in its initial form may be coated on one or both faces of a member (adherend) and then cured via cationic photopolymerization. It is however preferred that the adhesive composition is processed into a pressure-sensitive adhiseve sheet form beforehand and used in the form of a photocurable pressure-sensitive adhesive sheet. This improves handleability and process simplicity.

The photocurable pressure-sensitive adhesive sheet is preferably in the form of a double-sided sheet, but may be in the form of a single-sided sheet as occasion demands.

In the joining method in accordance with the present invention, the photocurable pressure-sensitive adhesive composition may be exposed to a radiation either before or after one member to which the photocurable pressure-sensitive adhesive composition is applied or adhered is combined with the other member.

In an exemplary case where at least one member permits transmission of a radiation, the photocurable pressure-sensitive adhesive composition or sheet may be first applied or adhered to the one member which is subsequently combined with the other member. Thereafter, a radiation is emitted toward the radiation-transmitting one member to provide a sufficient activation energy to allow the photocurable pressure-sensitive adhesive composition or sheet to cure via cationic photopolymerization. In the practice of this method, the activation energey is desired to be provided as quickly after combination of the members as possible, for the purpose of reducing a total time required for a joining process.

In another case where neither of the members permits transmission of a radiation, the photocurable pressure-sensitive adhesive composition or sheet may be first applied or adhered to at least one of the members, and then exposed at its surface to a radiation so that an activation energy is provided thereto. Thereafter, the one member is combined with the other member. The photocurable pressure-sensitive adhesive composition or sheet is allowed to cure via cationic photopolymerization. In the practice of this method, it is desirable to combine both members as quickly after provision of the activation energy as possible, preferably within 10 minutes, for the purpose of achieving succesful joint of the one member with the other member.

Whichever method is chosen, the photocurable pressure-sensitive adhesive composition or sheet is allowed to cure via cationic photopolymerization in a short time and, after cure, exhibits superior bond strength and good resistance to solvent, heat and water.

While irradiation is effected to provide an activation energy, other curing means such as application of heat or moisture, may also be utilized to accelerate a cure reaction of the photocurable pressure-sensitive adhesive composition or sheet, as well as to shorten a cure time.

### BEST MODE FOR CARRYING OUT THE INVENTION

Specific experimental examples of the present invention are described below. In the examples, "parts" means "parts by weight" unless otherwise expressed explicitly.

### (EXAMPLES)

### EXAMPLE 1

### (Preparation of Photocurable Pressure-Sensitive Adhesive Composition)

70 parts of a polyester resin (product name; UE3400, Tg: -20 °C, product of Unitika Ltd.), 20 parts of a cationically photopolymerizable compound (product name; EPICOAT 828, bisphenol A type epoxy resin, product of Yuka-Shell Epoxy Co., Ltd.), 10 parts of a flexible epoxy resin (product name; BEO 60E, product of Shin-Nippon Rika Co., Ltd.), 1 part of a cationic photoinitiator (product name; ADEKAOPTOMER SP170, product of Asahi Denka Kogyo Co., Ltd.), and 100 parts of methyl ethyl ketone were homogeneously mixed using a homodisper-type stirring mixer (product name "HOMO DISPER L-TYPE", manufactured by Tokushu Kika Kogyo Co., Ltd.) at a stirring rate of 3,000 rpm to prepare a photocurable pressure-sensitive adhesive composition.

### (Fabrication of Photocurable Pressure-Sensitive Adhesive Sheet)

The above-prepared photocurable pressure-sensitive adhesive composition was roll coated onto a release treated, 50 µm thick PET film to provide a dry coating thickness of 100 µm. Subsequent drying resulted in obtaining a photocurable pressure-sensitive sheet. A protective film of a silicon release treated, polyethylene laminated wood free paper was laminated onto the composition-coated surface of the photocurable pressure-sensitive adhesive sheet to thereby fabricate a photocurable pressure-sensitive adhesive sheet.

### (Preparation of Bonded Sample)

While removing the protective film, the photocurable pressure-sensitive adhesive sheet was laminated onto a 300 µm thick, glass-epoxy substrate at a room temperature. The lamination was performed at a pressure (line pressure) of 3 kg/cm and at a speed of 2 m/min. After removal of the release treated PET film, the composition-coated surface of the photocurable pressure-sensitive adhesive sheet was exposed to a 365 nm UV radiation at 2000 mJ/cm² using an ultrahigh-pressure mercury lamp. Immediately thereafter, a 50 µm thick polyimide film was laminated on the composition-coated surface at room temperature to prepare a bonded sample.

### (Evaluation)

The above-obtained bonded sample was evaluated for initial adhesive strength and bond strength in accordance with the following procedures. The results are shown in Table 1.

### (Initail Adhesive Strength)

Immediately after preparation, the bonded sample was cut into a 10 mm wide piece which was subsequently subjected to a 180° peel test using a Tensilon-type tensile tester at a peel rate of 50 mm/min to measure an initial adhesive strength (g/10 mm).

### (Bond Strength)

After left under an atmosphere of 65 % RH for 72 hours, the bonded sample was cut into a 10 mm wide piece which was subsequently subjected to a 180° peel test using a Tensilon-type tensile tester at a peel rate of 50 mm/min to measure a bond strength (g/10 mm).

### EXAMPLE 2

The procedure of Example 1 was followed, except that 70 parts of a different polyester resin (product name; VYLON 550, Tg: -16 °C, product of Toyobo Co., Ltd.) was used, to prepare a curable pressure-sensitive adhesive composition and then a sheet which was subsequently evaluated. The results are given in Table 1.

### EXAMPLE 3

### (Preparation of Photocurable Pressure-Sensitive Adhesive Composition)

160 parts of a 50 % solution of a polyester resin (product name; UE3400, Tg: -20 °C, product of Unitika Ltd.) in MEK, 20 parts of a cationically photopolymerizable compound (product name; EPICOAT 828, bisphenol A type epoxy resin, product of Yuka-Shell Epoxy Co., Ltd.), 1 part of a cationic photoinitiator (product name; ADEKAOPTOMER SP170, product of Asahi Denka Kogyo Co., Ltd.), and 16 parts of methyl ethyl ketone were homogeneously mixed using a homodisper-type stirring mixer (product name "HOMO DISPER L-TYPE", product of Tokushu Kika Kogyo Co., Ltd.) at a stirring rate of 3,000 rpm to prepare a photocurable pressure-sensitive adhesive composition.

### (Fabrication of Photocurable Pressure-Sensitive Adhesive Sheet)

The above-prepared photocurable pressure-sensitive adhesive composition was roll coated onto a release treated, 50 µm thick PET film to provide a dry coating thickness of 100 µm. Subsequent drying resulted in obtaining a photocurable pressure-sensitive sheet. A protective film of a silicon release treated, polyethylene laminated wood free paper was laminated onto the composition-coated surface of the photocurable pressure-sensitive adhesive sheet to thereby fabricate a photocurable pressure-sensitive adhesive sheet.

### (Preparation of Bonded Sample)

While removing the protective film, the photocurable pressure-sensitive adhesive sheet was laminated on a corona treated surface of a PET film at a room temperature. After removal of the realease treated PET film, the composition-coated surface of the photocurable pressure-sensitive adhesive sheet was exposed to a 365 nm UV radiation at 2,400 mJ/cm² using an ultrahigh-pressure mercury lamp. Immediately thereafter, a 2 mm thick plate of unplacticized polyvinyl chloride was laminated on the composition-coated surface at room temperature to prepare a bonded sample.

### (Evaluation)

The above-obtained bonded sample was evaluated for initial adhesive strength and bond strength in accordance with the same procedures as in Example 1. The results are shown in Table 1.

### EXAMPLE 4

The procedure of Example 3 was followed, except that a PET film, instead of polyvinyl chloride, was used as the adherend and T-peel, instead of 180° peel, was carried out in the measurement of bond strength. The results are given in Table 1.

### EXAMPLE 5

The procedure of Example 3 was followed, except that the blending proportion of the epoxy resin was altered from 20 parts to 15 parts and a glass-epoxy substrate, instead of polyvinyl chloride, was used as the adherend. The results are given in Table 1.

### EXAMPLE 6

120 parts of a 50 % solution of a polyester resin (product name; UE3400, Tg: -20 °C, product of Unitika Ltd.) in ethyl acetate, 40 parts of a cationically photopolymerizable compound (product name; EPICOAT 828, bisphenol A type epoxy resin, product of Yuka-Shell Epoxy Co., Ltd.), 1 part of a cationic photoinitiator (product name; ADEKAOPTOMER SP170, product of Asahi Denka Kogyo Co., Ltd.), and 92 parts of ethyl acetate methyl ethyl ketone were used to prepare a photocurable pressure-sensitive adhesive composition. Otherwise, the procedure of Example 3 was followed. The results are given in Table 1.

### EXAMPLE 7

The procedure of Example 6 was followed, except that a PET film, instead of polyvinyl chloride, was used as the adherend and T-peel, instead of 180° peel, was carried out in the measurement of bond strength. The results are given in Table 1.

### EXAMPLE 8

The procedure of Example 3 was followed, except that a glass-epoxy substrate, instead of polyvinyl chloride, was used as the adherend. The results are given in Table 1.

### COMPARATIVE EXAMPLE 1

The procedure of Example 1 was followed, except that a different polyester resin (product name; UE3210, Tg: 45 °C, product of Toyobo Co., Ltd.) was used. The results are given in Table 1.

### COMPARATIVE EXAMPLE 2

The procedure of Example 1 was followed, except that a different polyester resin (product name; VYLON 200, Tg: 67 °C, product of Toyobo Co., Ltd.) was used. The results are given in Table 1.

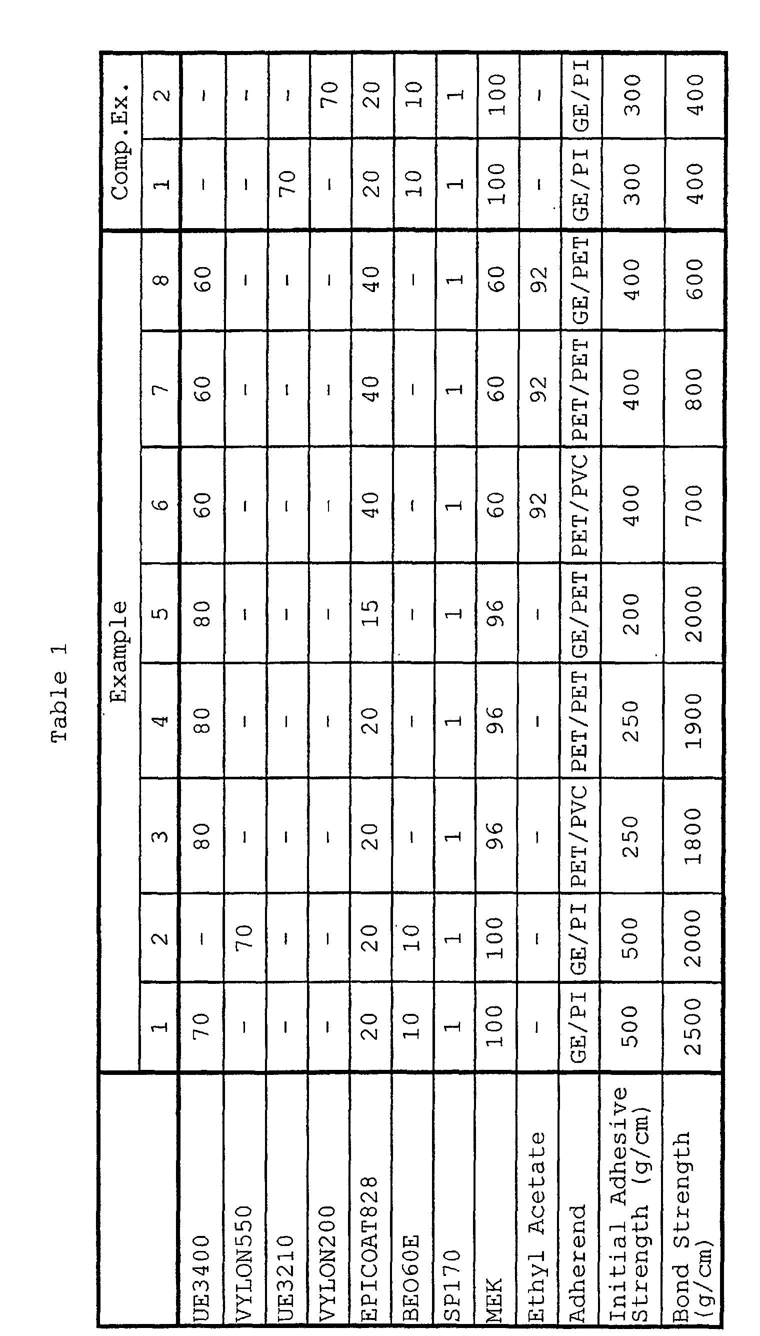

### UTILITY IN INDUSTRY

The photocurable pressure-sensitive adhesive composition in accordance with the present invention includes, at least, a polyester resin having a glass transition temperature (Tg) in the range of -60 to 25 °C, a cationically photopolymerizable compound and a cationic photoinitiator. It therefore shows good pressure-sensitive adhesive properties at ordinary temperature, initiates cure upon exposure to a radiation to thereby build satisfactory bond strength even to a high-polarity adherend. It is also applicable to uses that require repairs.

## Claims

1. A photocurable pressure-sensitive adhesive composition comprising a polyester resin having a glass transition temperature (Tg) in the range of -60 °C - 25 °C, a cationically photopolymerizable compound and a cationic photoinitiator.

2. The photocurable pressure-sensitive adhesive composition as recited in claim 1, **characterized in that** the cationically photopolymerizable compound is incorporated in the amount of 10 - 40 parts by weight, based on 60 - 90 parts by weight of the polyester resin.

3. The photocurable pressure-sensitive adhesive composition as recited in claim 1, **characterized in that** the cationically photopolymerizable compound is incorporated in the amount of 25 - 40 parts by weight, based on 75 - 90 parts by weight of the polyester resin.

4. A curable pressure-sensitive adhesive sheet comprising the photocurable pressure-sensitive adhesive composition as recited in any one of claims 1 - 3.

5. A method of joining members **characterized in that**, when the members are combined with each other using the photocurable pressure-sensitive adhesive composition as recited in any one of claims 1 - 3, the photocurable pressure-sensitive adhesive composition is exposed to a radiation so that it is cured.

6. A method of joining members **characterized in that**, when the members are combined with each other using the curable pressure-sensitive adhesive sheet as recited in claim 4, the curable pressure-sensitive adhesive sheet is exposed to a radiation so that it is cured.
